# EUROPEAN PATENT APPLICATION

(11) **EP 4 365 921 A1**
(43) Date of publication of application: **08.05.2024**
(21) Application number: 22832158.4
(22) Date of filing: 30.06.2022
(51) Int. Cl.: H01G 4/38, H01G 4/224, H01G 4/228

(54) **CAPACITOR MODULE AND MOTOR INVERTER**

(30) Priority: 30.06.2021 CN 202121480774 U
(71) Applicant: Shanghai Valeo Automotive Electrical Systems Co., Ltd., Shanghai 201201 (CN)
(72) Inventor: WEI, Yubo, Shanghai 201201 (CN); QIAN, Zheng, Shanghai 201201 (CN); XU, Jin, Shanghai 201201 (CN); WANG, Jian, Shanghai 201201 (CN); LIU, Lei, Shanghai 201201 (CN); ZHANG, Yangyang, Shanghai 201201 (CN); WANG, Junhao, Shanghai 201201 (CN)
(74) Representative: Valeo Powertrain Systems
(86) International application number: PCT/CN2022/102646
(87) International publication number: WO 2023/274346

(57) **Abstract**

Disclosed in the present application are a capacitor module and a motor inverter. The capacitor module comprises: a capacitor support and a plurality of capacitors, wherein the plurality of capacitors are respectively connected to the capacitor support, and the plurality of capacitors are arranged in parallel in multiple rows; and the capacitor support comprises a base plate, a negative conductive plate, a partition and a positive conductive plate which are arranged in sequence in an overlapping manner, wherein a plurality of rows of through holes are formed in the base plate in parallel, positive pins and negative pins of the capacitors respectively penetrate the corresponding through holes to be connected to the corresponding positive conductive plate and the corresponding negative conductive plate in a welding manner, the positive conductive plate is bent towards side surfaces of a periphery of the capacitor module to form positive terminals, and the negative conductive plate is bent towards the side surfaces of the periphery of the capacitor module to form negative terminals. The capacitor module can improve the filtering effect of the motor inverter and reduce the size of the motor inverter. Correspondingly, also provided in the present application is a motor inverter.

## Description

### TECHNICAL FIELD

The present application relates to the field of motor technology, and in particular to a capacitor module and to a motor inverter.

### BACKGROUND

A motor inverter is a widely used power converter for vehicles. Generally, a motor inverter comprises three power modules and an energy storage capacitor module. To ensure the filtering effect of the inverter, each capacitor of the capacitor module needs to be as close as possible to each power module so that the capacitance value is evenly distributed to the power modules as much as possible. However, a plurality of energy storage capacitors of a conventional capacitor module are arranged in a structure of single row, and a plurality of circuit connection terminals of the positive and negative conductive plates of the capacitor module are arranged on one side of the capacitor module, so that some energy storage capacitors are closer to the power module, some energy storage capacitors are further to the power module, resulting in a relatively big difference in the distance between different energy storage capacitors and the power module, causing uneven distribution of the capacitance value and affecting the filtering effect of the inverter. In addition, the row length of a plurality of energy storage capacitors which are arranged in a single row is large, resulting in the installation space occupied by the capacitor module is large and affecting the size of the inverter.

### SUMMARY

The purpose of the present application is to propose a capacitor module and a motor inverter, which can improve the filtering effect of the inverter and reduce its size.

To achieve this objective, in one aspect, the present application uses the following technical solution:
A capacitor module comprises a capacitor support and a plurality of capacitors, a plurality of the capacitors are respectively connected to the capacitor support, a plurality of the capacitors are arranged in a plurality of rows in parallel, the capacitor support comprises a base plate, a negative conductive plate, a partition plate and a positive conductive plate which are stacked in sequence, a plurality of through holes are arranged in a plurality of rows in parallel on the base plate, positive pins and negative pins of the capacitors are respectively soldered and connected to the corresponding positive conductive plate and negative conductive plate through corresponding through holes, the positive conductive plate is bent towards side surfaces of the capacitor module to form positive terminals, and the negative conductive plate is bent towards side surfaces of the capacitor module to form negative terminals.

In one embodiment, the base plate is provided with support sleeves, and the support sleeves are respectively sleeved on the corresponding positive terminals and negative terminals.

In one embodiment, reinforcing ribs are provided between the base plate and the support sleeves.

In one embodiment, the support sleeves are arranged perpendicular to the base plate, an inner diameter of the support sleeves gradually becomes smaller along the bending direction of the positive terminals and the negative terminals, and the size of the support sleeves where they have the smallest inner diameter is slightly larger than the thickness of the corresponding positive terminals or negative terminals.

In one embodiment, the base plate and the positive conductive plate are connected by hot riveting.

In one embodiment, the base plate and the positive conductive plate are connected by injection molding.

In one embodiment, the base plate is provided with a mounting hole.

In one embodiment, a washer is provided in the mounting hole.

In one embodiment, the base plate and the partition plate are both made of insulating plastics.

In another aspect, the present application also provides a motor inverter, comprising the capacitor module as described in any of the paragraphs above.

In the capacitor module described above, a plurality of capacitors are arranged in a plurality of rows in parallel, both the positive conductive plate and the negative conductive plate have the corresponding positive terminals and negative terminals distributed on all the four sides of the capacitor module. The layout of the plurality of capacitors in rows in parallel can reduce the row length of the capacitor module, thereby achieving a circular layout with the capacitor module at the center and three power modules and one filter module arranged around the capacitor module. The capacitor module located at the center is connected to the corresponding power module and filter module through the positive terminals and negative terminals distributed at the four sides. Each capacitor can be as close to the corresponding power module as possible, the distances between different capacitors and power modules are similar, and the capacitance value can be evenly distributed to the three power modules, thereby effectively improving the filtering effect. In addition, as the row length of the energy storage capacitors is reduced, the diameter of the inverter is also reduced with it, which can reduce the size of the inverter.

By using the capacitor module described above, the motor inverter described above has the benefits of a good filtering effect and a small size.

### BRIEF DESCRIPTION OF THE DRAWINGS

FIG. 1 is a schematic structural diagram of the capacitor module in one embodiment;
FIG. 2 is a section view of the capacitor module in one embodiment;
FIG. 3 is a schematic structural diagram of the capacitor support in one embodiment.

Numerals in the drawings:
10 - capacitor support, 11 - base plate, 111 - support sleeve, 112 - reinforcing rib, 113 - through hole, 114 - washer, 12 - negative conductive plate, 13 - partition plate, 14 - positive conductive plate, 15 - positive terminal, 16 - negative terminal, 17 - hot rivet nut, and 20 - capacitor.

### DETAILED DESCRIPTION

The technical solution of the present application is explained further below by way of specific embodiments by referring to the drawings.

In the description of the present application, it should be understood that orientation or positional relationships indicated by the terms "up", "down", "front", "rear", "left", "right", "vertical", "horizontal", "top", "bottom", "inner" and "outer", etc., are based on the orientation or positional relationships shown in the accompanying drawings, and are merely intended to facilitate the description of the present application and simplify the description, rather than indicating or implying that the apparatus or element referred to must have a specific orientation or be constructed and operated in a specific orientation, and therefore should not be understood as limiting the present application.

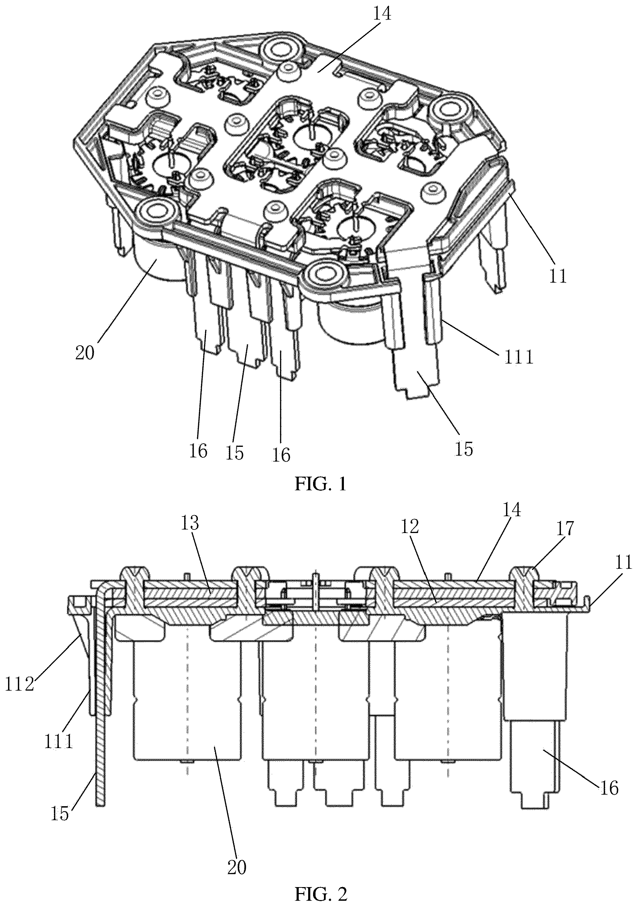

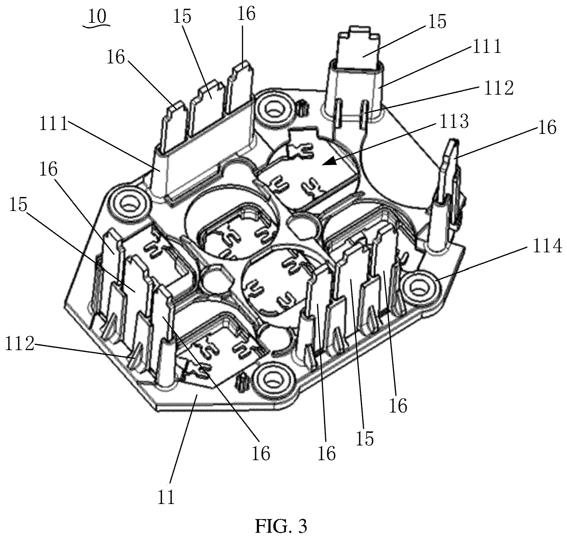

Referring to FIG. 1 to FIG. 3, the capacitor module of one embodiment comprises a capacitor support 10 and a plurality of capacitors 20, wherein the plurality of capacitors 20 are respectively connected to the capacitor support 10, the plurality of capacitors 20 are arranged in a plurality of rows in parallel, the capacitor support 10 comprises a base plate 11, a negative conductive plate 12, a partition plate 13 and a positive conductive plate 14 stacked in sequence, a plurality of rows of through holes 113 in parallel are formed in the base plate 11, positive pins and negative pins of the capacitors 20 respectively penetrate the corresponding through holes 113 and are then welded to the corresponding positive conductive plate 14 and negative conductive plate 12, the positive conductive plate 14 is bent toward side surfaces of four sides of the capacitor module to form positive terminals 15, and the negative conductive plate 12 is bent toward side surfaces of four sides of the capacitor module to form negative terminals 16.

Specifically, in this embodiment, the capacitor module comprises six capacitors 20, and the six capacitors 20 are arranged in two rows of three in parallel.

In the capacitor module described above, a plurality of capacitors 20 are arranged in a plurality of rows in parallel, both the positive conductive plate 14 and the negative conductive plate 12 have the corresponding positive terminals 15 and negative terminals 16 distributed on all the four sides of the capacitor module. The layout of the plurality of capacitors 20 in rows in parallel can reduce the row length of the capacitor module, thereby achieving a circular layout with the capacitor module at the center and three power modules and one filter module arranged around the capacitor module. The capacitor module located at the center is connected to the corresponding power module and filter module through the positive terminals 15 and negative terminals 16 distributed at the four sides. Each capacitor 20 can be as close to the corresponding power module as possible, the distances between different capacitors 20 and power modules are similar, and the capacitance value of the capacitors 20 can be evenly distributed to the three power modules, thereby effectively improving the filtering effect. In addition, as the row length of the energy storage capacitors 20 is reduced, the diameter of the inverter is also reduced with it, which can reduce the size of the inverter.

In one embodiment, the base plate 11 and the partition plate 13 are both made of insulating plastics. Of these, the partition plate 13 is used to provide insulation and support for the positive conductive plate 14 and the negative conductive plate 12. The base plate 11 is the main bearing component of the entire capacitor support 10 and is used to provide insulation and support for the positive conductive plate 14, the negative conductive plate 12 and the partition plate 13 and provide installation support and positioning for the entire capacitor module. In one embodiment, mounting holes are formed in the base plate 11, and the base plate 11 is fixedly mounted on the inverter through the mounting holes and fasteners (for example, bolts). Further, to further improve the installation stability of the base plate 11, a washer 114 is provided in the mounting holes. The washer 114 may be, but is not limited to, a metal washer 114.

In one embodiment, to improve the structural stability of the electrode terminals on the positive conductive plate 14 and the negative conductive plate 12, the base plate 11 is provided with support sleeves 111, and the support sleeves 111 are respectively sleeved on the corresponding positive terminals 15 and negative terminals 16. Further, to improve the structural strength of the support sleeves 111, in one embodiment, reinforcing ribs 112 are provided between the base plate 11 and the support sleeves 111.

In one embodiment, the support sleeves 111 are arranged perpendicular to the base plate 11, the inner diameter of the support sleeves 111 gradually becomes smaller along the bending direction of the positive terminals 15 and the negative terminals 16, and the size of the support sleeve 111 where it has the smallest inner diameter is slightly larger than the thickness of the corresponding positive terminal 15 or negative terminal 16. Generally, in order to meet the laser welding gap requirement for the corresponding copper plate pins on the power module, the bending angle of the positive terminals 15 and the negative terminals 16 is 90 degrees. However, affected by the stamping process, there will be a deviation in the bending angle of the positive terminals 15 and the negative terminals 16. In this embodiment, the support sleeves 111 are arranged perpendicularly to the base plate 11, the size of the support sleeves 111 where it has the smallest inner diameter is slightly larger than the thickness of the corresponding positive terminal 15 or negative terminal 16, and the positive terminals 15 and the negative terminals 16 are inserted into the corresponding support sleeves 111 and are tightly clamped by the support sleeves 111 where the support sleeves 111 has the smallest inner diameter, so that the bending angle of the positive terminals 15 and the negative terminals 16 can be corrected through the support sleeves 111 to ensure that the bending angle of the positive terminals 15 and the negative terminals 16 is always maintained at 90 degrees. Further, in this embodiment, the inner diameter of the support sleeves 111 gradually becomes smaller along the bending direction of the positive terminals 15 and the negative terminals 16 to form a tapered design, and the inner diameter of the support sleeves 111 at the position where the positive terminals 15 and the negative terminals 16 are inserted is the largest, which makes it easy to insert and align them and helps to improve assembly efficiency.

In one embodiment, the base plate 11 and the positive conductive plate 14 are connected by hot riveting. As shown in FIG. 2, the base plate 11 and the positive conductive plate 14 are fixedly connected through the hot rivet nut 17, and tightly clamp the negative conductive plate 12 and the partition plate 13, forming a stable and reliable connection that can effectively ensure the structural strength of the capacitor support 10. Further, in other embodiments, the base plate 11 and the positive conductive plate 14 may also be connected by injection molding, which can also stably clamp the negative conductive plate 12 and the partition plate 13 and ensure the structural strength of the capacitor support 10.

In another aspect, the present application also provides a motor inverter, comprising the capacitor module described above. With the capacitor module described above applied, the motor inverter of this embodiment has the benefits of a good filtering effect and a small size.

The technical features of the embodiments above may be combined in any manner. To simplify the description, not all possible combinations of the technical features in the above embodiments are described. However, as long as there is no contradiction in the combination of these technical features, all possible combinations should be considered to be within the scope of this specification.

The above examples only demonstrate a few embodiments of the present application. The description is relatively specific and detailed, but they may not be understood as limiting the scope of the patent application. It should be pointed out that without departing from the concept of the present application, a person skilled in the art could still make changes and improvements, all of which are included in the scope of protection of the present application. Thus, the scope of patent protection of the present application shall be defined by the attached claims.

## Claims

1. A capacitor module, comprising: a capacitor support and a plurality of capacitors (20), wherein a plurality of the capacitors (20) are respectively connected to the capacitor support, a plurality of the capacitors (20) are arranged in a plurality of rows in parallel, the capacitor support comprises a base plate (11), a negative conductive plate (12), a partition plate (13) and a positive conductive plate (14) which are stacked in sequence, a plurality of through holes (113) are arranged in a plurality of rows in parallel on the base plate (11), positive pins and negative pins of the capacitors (20) are respectively soldered and connected to a corresponding positive conductive plate (14) and a negative conductive plate (12) through corresponding through holes (113), the positive conductive plate (14) is bent towards side surfaces of the capacitor module to form positive terminals (15), and the negative conductive plate (12) is bent towards side surfaces of the capacitor module to form negative terminals (16).

2. The capacitor module according to claim 1, wherein the base plate (11) is provided with support sleeves (111), the support sleeves (111) are respectively sleeved on outer sides of corresponding positive terminals (15) and corresponding negative terminals (16).

3. The capacitor module according claim 2, wherein reinforcing ribs (112) are provided between the base plate (11) and the support sleeves (111).

4. The capacitor module according to claim 2, wherein the support sleeves (111) are arranged perpendicular to the base plate (11), an inner diameter of the support sleeves (111) gradually becomes smaller along a bending direction of the positive terminals (15) and the negative terminals (16), and a size of the support sleeves (111) where they have the smallest inner diameter is slightly larger than a thickness of the corresponding positive terminals (15) or the corresponding negative terminals (16).

5. The capacitor module according to claim 1, wherein the base plate (11) and the positive conductive plate (14) are connected by hot riveting.

6. The capacitor module according to claim 1, wherein the base plate (11) and the positive conductive plate (14) are connected by injection molding.

7. The capacitor module according to claim 1, wherein the base plate (11) is provided a mounting hole.

8. The capacitor module according to claim 7, wherein a washer (114) is provided in the mounting hole.

9. The capacitor module according to claim 1, wherein the base plate (11) and the partition plate (13) are both made of insulating plastics.

10. A motor inverter, comprising the capacitor module as claimed in any of claims 1 to 9.
